(19) **Europäisches Patentamt European Patent Office Office européen des brevets**

(11) **EP 4 535 880 A1**

(12) **EUROPEAN PATENT APPLICATION**
published in accordance with Art. 153(4) EPC

(43) Date of publication:
**09.04.2025 Bulletin 2025/15**

(21) Application number: **23816384.4**

(22) Date of filing: **01.06.2023**

(51) International Patent Classification (IPC):
**H04W 52/02** (2009.01)    **H04W 76/28** (2018.01)
**H04W 76/14** (2018.01)    **H04W 72/25** (2023.01)
**H04W 92/18** (2009.01)

(52) Cooperative Patent Classification (CPC):
**H04W 52/02; H04W 72/25; H04W 76/14;**
**H04W 76/28; H04W 92/18**

(86) International application number:
**PCT/KR2023/007515**

(87) International publication number:
**WO 2023/234724 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.06.2022 US 202263348992 P**

(71) Applicant: **LG Electronics Inc.**
**Yeongdeungpo-gu**
**Seoul 07336 (KR)**

(72) Inventors:
• **LEE, Youngdae**
**Seoul 06772 (KR)**
• **BACK, Seoyoung**
**Seoul 06772 (KR)**
• **PARK, Giwon**
**Seoul 06772 (KR)**
• **LEE, Seungmin**
**Seoul 06772 (KR)**
• **SEO, Hanbyul**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR CONFIGURING SIDELINK DISCONTINUOUS RECEPTION IN WIRELESS COMMUNICATION SYSTEM**

(57)   Disclosed are a method and a device for configuring sidelink discontinuous reception in a wireless communication system. A method performed by a first UE, according to one embodiment of the present disclosure, may comprise the steps of: receiving information about a first SL DRX configuration from a second UE; determining an SL active time for monitoring SCI from the second UE on the basis of the first SL DRX configuration; and redetermining the SL active time on the basis of receiving information about a second SL DRX configuration from a base station or receiving information about a third SL DRX configuration from the second UE.

FIG.11

Receive information on first SL DRX configuration — S1101

Determine SL active time — S1102

Receive information on second or third SL DRX configuration — S1103

Redetermine SL active time — S1104

## Description

[Technical Field]

The present disclosure relates to a wireless communication system, and in more detail, relates to a method and an apparatus for configuring sidelink discontinuous reception (DRX) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for configuring/generating an SL DRX configuration.

In addition, an additional technical object of the present disclosure is to provide a method and an apparatus for determining an SL active time based on an SL DRX configuration.

The technical objects to be achieved by the present disclosure are not limited to the above-described technical objects, and other technical objects which are not described herein will be clearly understood by those skilled in the pertinent art from the following description.

[Technical Solution]

A method performed by a first user equipment (UE) in a wireless communication system according to an aspect of the present disclosure may include: receiving information for a first sidelink (SL) discontinuous reception (DRX) configuration from a second UE; determining an SL active time for monitoring sidelink control information (SCI) from the second UE based on the first SL DRX configuration; and redetermining the SL active time based on receiving information for a second SL DRX configuration from a base station or receiving information for a third SL DRX configuration from the second UE. The SL active time may be re-determined based on i) both the first SL DRX configuration and the second SL DRX configuration or ii) both the first SL DRX configuration and the third SL DRX configuration.

[Technical Effects]

According to an embodiment of the present disclosure, power consumption of a UE can be reduced by adjusting an SL active time by reflecting an SL DRX configuration received from a base station or another UE.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating a DRX cycle in a wireless communication system to which the present disclosure can be applied.

FIG. 8 illustrates a procedure for performing V2X or SL communication according to a transmission mode in a wireless communication system to which the present disclosure can be applied.

FIG. 9 illustrates an SL DRX configuration method according to an embodiment of the present disclosure.

FIG. 10 illustrates a signaling procedure for an SL DRX configuration method according to an embodiment of the present disclosure.

FIG. 11 is a diagram illustrating an operation of a UE for an SL DRX configuration method according to an embodiment of the present disclosure.

FIG. 12 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location

- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

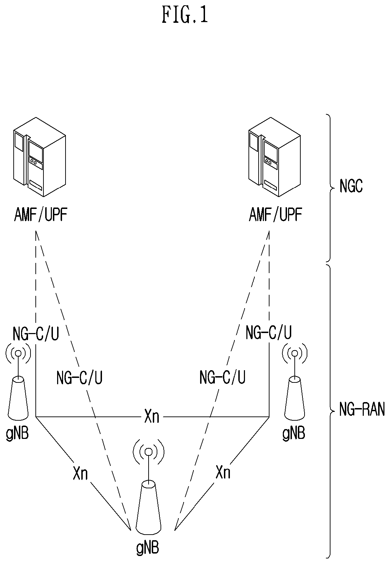

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

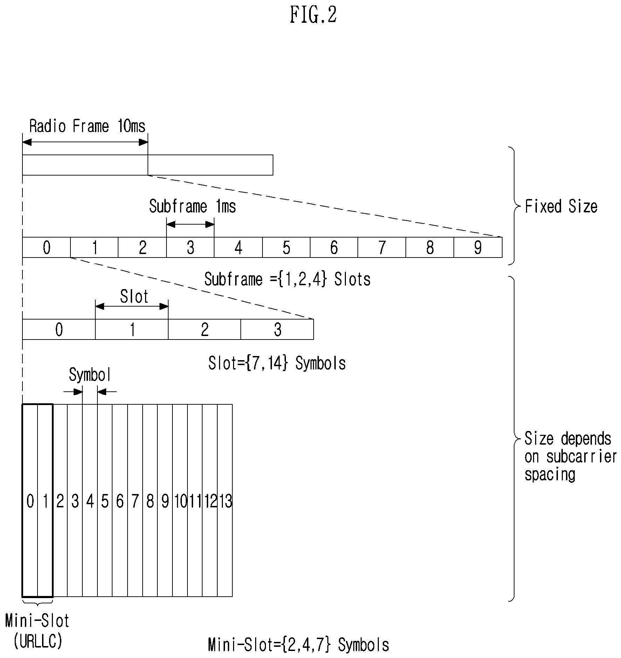

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

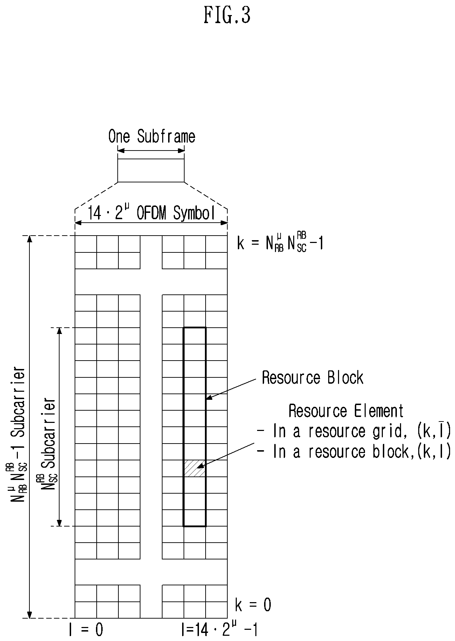

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

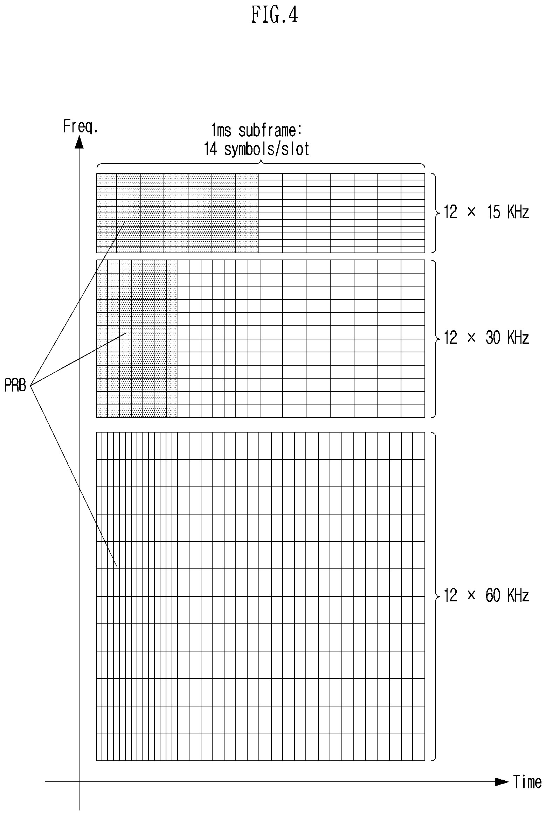

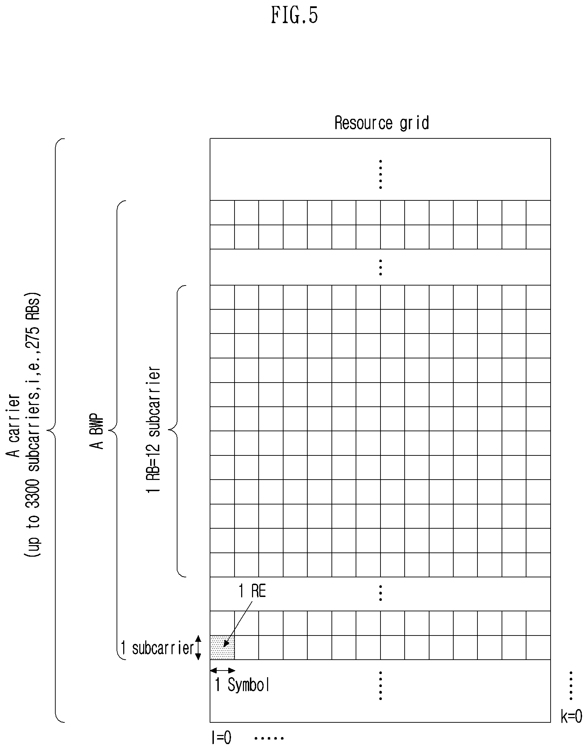

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP (Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

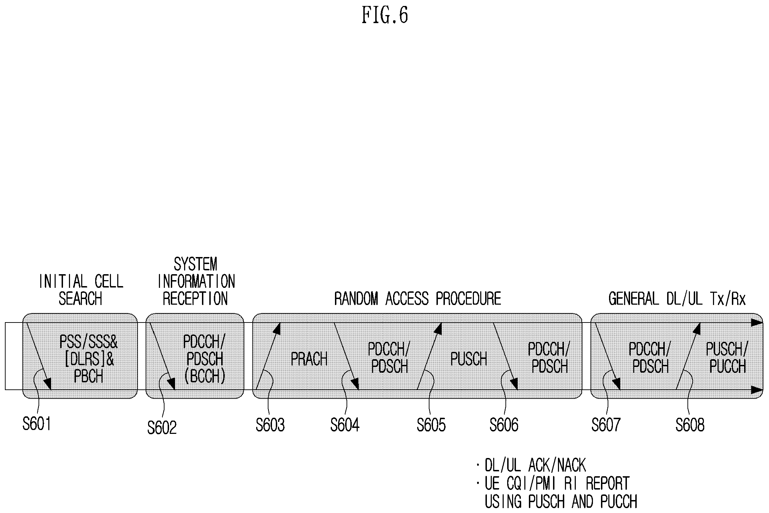

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |

(continued)

| DCI Format | Use |
|---|---|
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Discontinuous reception (DRX) operation

A UE configured with DRX can discontinuously receive DL signals to reduce power consumption. DRX can be performed in the RRC_IDLE state, RRC_INACTIVE state, and RRC_CONNECTED state.

Hereinafter, the DRX operation in the RRC_CONNECTED state is described.

In the RRC_CONNECTED state, DRX is used for discontinuous reception of a PDCCH. For convenience, DRX performed in the RRC _CONNECTED state is referred to as RRC _CONNECTED DRX.

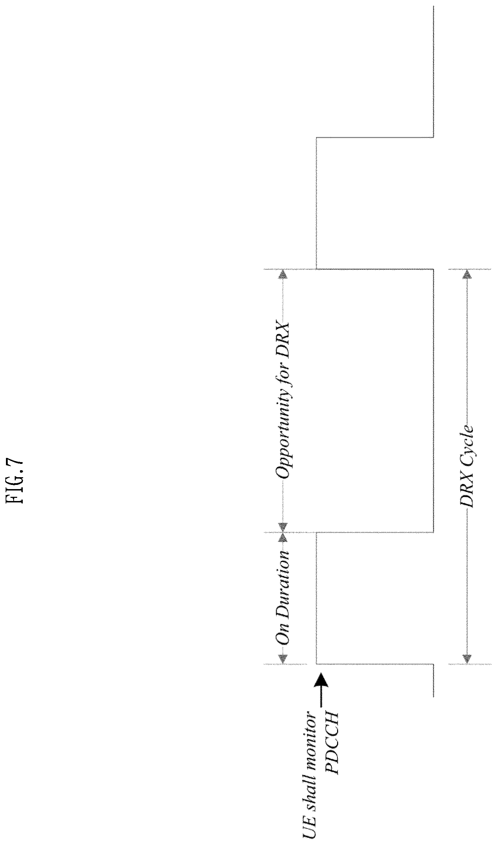

FIG. 7 is a diagram illustrating a DRX cycle in a wireless communication system to which the present disclosure can be applied.

Referring to FIG. 7, a DRX cycle includes On Duration and Opportunity for DRX. The DRX cycle defines a time interval during which the On Duration is periodically repeated. The On Duration indicates the time period during which a UE monitors to receive a PDCCH. When DRX is configured, a UE performs PDCCH monitoring during the On Duration. If there is a PDCCH that is successfully detected during the PDCCH monitoring, a UE starts an inactivity timer and remains in an awake state. On the other hand, if there is no PDCCH that is successfully detected during the PDCCH monitoring, a UE enters a sleep state after the On Duration ends. Therefore, when DRX is configured, PDCCH monitoring/reception can be performed discontinuously in a time domain when performing the procedure and/or method described/proposed above.

Table 6 shows a process of a UE related to DRX (RRC_CONNECTED state).

[Table 6]

| | Type of signal | UE procedure |
|---|---|---|
| First step | RRC signaling (MAC-CellGroupConfig) | - Receive DRX configuration information |

(continued)

|  | Type of signal | UE procedure |
|---|---|---|
| Second step | MAC CE ((long) DRX command MAC CE) | - Receive DRX command |
| Third step | - | - PDCCH monitoring during On Duration of DRX cycle |

Referring to Table 6, DRX related configuration information is received via higher layer (e.g., RRC) signaling (e.g., DRX-Config), and whether DRX is ON/OFF is controlled by the DRX command MAC CE of a MAC layer. When DRX is configured, a UE can perform PDCCH monitoring discontinuously as illustrated in FIG. 7.

Here, configuration information for a MAC cell group (MAC-CellGroupConfig) includes configuration information required to configure MAC parameters for a cell group. MAC-CellGroupConfig may also include configuration information regarding DRX (e.g., DRX-Config). For example, configuration information regarding DRX (e.g., DRX-Config) may include information defining DRX as follows:

- drx-onDurationTimer: Defines the duration in DRX cycle time.
- drx-SlotOffset: Defines the delay before the start of drx-onDurationTimer.
- drx-InactivityTimer: Defines the duration after a PDCCH occasion indicating a new UL, DL or SL for the MAC entity.
- drx-RetransmissionTimerDL: Defines the maximum duration until a DL retransmission is received.
- drx-RetransmissionTimerUL: Defines the maximum duration until a grant for a UL retransmission is received.
- drx-LongCycleStartOffset: Indicates a long DRX cycle, and also defines a subframe where a long and short DRX cycles start.
- drx-ShortCycle (optional): Defines a short DRX cycle.
- drx-ShortCycleTimer (optional): Defines a period for which a UE should follow a short DRX cycle.
- drx-HARQ-RTT-TimerDL: Defines the minimum period before DL assignment for HARQ retransmission expected by a MAC entity.
- drx-HARQ-RTT-TimerUL: Defines the minimum period before UL HARQ retransmission grant expected by a MAC entity.

More specifically about short DRX and long DRX operations, first, after receiving a PDCCH indicating initial UL or DL data, a DRX inactivity timer (drx-InactivityTimer) is started/restarted, and a UE remains in an awake state until the DRX inactivity timer (drx-InactivityTimer) expires.

When a DRX inactivity timer (drx-InactivityTimer) expires, a short DRX cycle can be optionally performed. That is, a base station can configure a UE to use the short DRX cycle by including a short DRX parameter set (i.e., drx-ShortCycle, drx-ShortCycleTimer) in the DRX-Config. In other words, if a short DRX parameter set in the DRX-Config is not configured, a UE can use a long DRX cycle described below. During a period of a short DRX cycle, if [(SFN $\times$ 10) + subframe number] modulo (drx-ShortCycle) = (drx-StartOffset) modulo (drx-ShortCycle) is satisfied at the start of a specific subframe, a DRX active period starts after a DRX offset (drx-SlotOffset).

A UE maintains a DRX active state for a period defined by a DRX on-duration timer (drx-onDurationTimer). If data transmission is initiated during a DRX active period, a DRX inactivity timer (drx-InactivityTimer) is restarted and the above-described operations are performed thereafter.

When a short DRX cycle period (drx-ShortCycle $\times$ drx-ShortCycleTimer) ends, a long DRX cycle starts. Alternatively, if a short DRX parameter set in DRX-Config is not configured, a long DRX cycle may start when a DRX inactivity timer (drx-InactivityTimer) expires. During a long DRX cycle period, if [(SFN $\times$ 10) + subframe number] modulo (drx-LongCycle) = drx-StartOffset is satisfied at a start of a specific subframe, a DRX active period starts after a DRX offset (drx-SlotOffset).

In addition, if a UE becomes DRX inactive after transmitting uplink data on a PUSCH, the UE needs to temporarily return to DRX active state to check for a retransmission request from a base station. A DRX UL HARQ RTT (round trip time) timer (drx-HARQ-RTT-TimerUL) specifies the timing of returning to DRX active state relative to the end of the first repetition of PUSCH transmission (the end of PUSCH transmission if PUSCH repetition is not configured). That is, when a DRX UL HARQ RTT (round trip time) timer (drx-HARQ-RTT-TimerUL) expires, a UE transitions from DRX inactive to DRX active state. A UE maintains a DRX active state for a period defined by a DRX UL retransmission timer (drx-RetransmissionTimerUL).

Similarly, if a UE is in DRX inactive state after receiving downlink data on a PDSCH and the UE transmits a NACK (negative acknowledgement) for the data on a PUCCH, the UE needs to return to DRX active state to receive retransmission from a base station. In this case, a DRX DL HARQ RTT timer (drx-HARQ-RTT-TimerDL) is started after a UE transmits a NACK on a PUCCH. That is, when a DRX DL HARQ RTT timer (drx-HARQ-RTT-TimerDL) expires, a UE transitions from DRX inactive to DRX active state. A UE maintains the DRX active state for a period defined by a DRX DL retransmission timer (drx-RetransmissionTimerDL).

Meanwhile, a DRX command MAC CE and a long DRX command MAC CE are used to immediately cause a UE to enter the DRX inactive state without waiting for a DRX inactivity timer (drx-InactivityTimer) to expire. A DRX command MAC CE instructs a UE to enter the DRX inactive state, and if short DRX is configured, a UE starts a short DRX cycle, and if short DRX is not configured, a UE starts a long DRX cycle. A long DRX command MAC CE instructs a UE to enter the DRX inactive state and start a long DRX cycle.

V2X (vehicle-to-everything)/sidelink (SL) communication

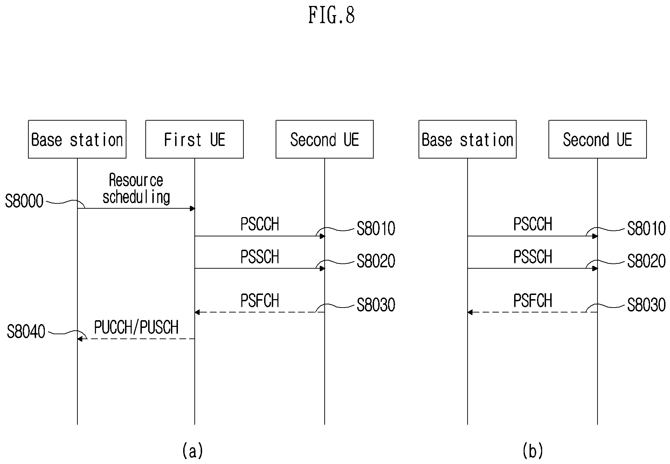

FIG. 8 illustrates a procedure for performing V2X or SL communication according to a transmission mode in a wireless communication system to which the present disclosure can be applied.

The embodiment of FIG. 8 can be combined with various embodiments of the present disclosure. In various embodiments of the present disclosure, the transmission mode may be referred to as a mode or a resource allocation mode. Hereinafter, for convenience of explanation, the transmission mode in LTE may be referred to as an LTE transmission mode, and the transmission mode in NR may be referred to as an NR resource allocation mode.

For example, FIG. 8(a) illustrates an operation of a UE related to LTE transmission mode 1 or LTE transmission mode 3. Alternatively, for example, FIG. 8(a) illustrates an operation of a UE related to NR resource allocation mode 1. For example, LTE transmission mode 1 can be applied to general SL communication, and LTE transmission mode 3 can be applied to V2X communication.

For example, FIG. 8(b) illustrates an operation of a UE associated with LTE transmission mode 2 or LTE transmission mode 4. Alternatively, for example, FIG. 8(b) illustrates the operation of a UE associated with NR resource allocation mode 2.

Referring to FIG. 8(a), in LTE transmission mode 1, LTE transmission mode 3, or NR resource allocation mode 1, a base station may schedule an SL resource to be used by a UE for SL transmission (S8000). For example, a base station may transmit information related to an SL resource and/or information related to a UL resource to a first UE. For example, the UL resource may include a PUCCH resource and/or PUSCH resource. For example, the UL resource may be a resource for reporting SL HARQ feedback to the base station.

For example, a first UE may receive information related to a dynamic grant (DG) resource and/or information related to a configured grant (CG) resource from a base station. For example, the CG resource may include a CG type 1 resource or a CG type 2 resource. In the present disclosure, the DG resource may be a resource that a base station configures/allocates to a first UE via DCI. In the present disclosure, the CG resource may be a (periodic) resource that a base station configures/allocates to a first UE via DCI and/or an RRC message. For example, in the case of a CG type 1 resource, a base station may transmit an RRC message including information related to the CG resource to a first UE. For example, for CG type 2 resources, a base station may transmit an RRC message including information related to the CG resource to a first UE, and a base station may transmit DCI related to activation or release of the CG resource to the first UE.

A first UE may transmit a PSCCH (e.g., Sidelink Control Information (SCI) or 1st-stage SCI) to a second UE based on the resource scheduling (S8010).

A first UE may transmit a PSSCH (e.g., 2nd-stage SCI, MAC protocol data unit (PDU), data, etc.) related to a PSCCH to a second UE (S8020).

A first UE may receive a PSFCH related to a PSCCH/PSSCH from a second UE (S8030). For example, HARQ feedback information (e.g., NACK information or ACK information) may be received from the second UE via the PSFCH.

A first UE can transmit/report HARQ feedback information to a base station via a PUCCH or PUSCH (S8040). For example, the HARQ feedback information reported to the base station may be information generated by the first UE based on HARQ feedback information received from the second UE. For example, the HARQ feedback information reported to the base station may be information generated by the first UE based on a rule configured in advance. For example, the DCI may be DCI for scheduling SL. For example, the format of the DCI may be DCI format 3_0 or DCI format 3_1.

Referring to FIG. 8(b), in LTE transmission mode 2, LTE transmission mode 4 or NR resource allocation mode 2, a UE may determine an SL transmission resource within SL resources configured by a base station/network or preconfigured SL resources. For example, the configured SL resources or preconfigured SL resources may be a resource pool. For example, a UE may autonomously select or schedule resources for SL transmission. For example, a UE may perform SL communication by selecting a resource within a configured resource pool. For example, a UE may perform sensing and resource (re)selection procedures to select a resource within a selection window by itself. For example, the sensing may be performed on a sub-channel basis.

A first UE that has selected a resource within a resource pool can transmit a PSCCH (e.g., SCI or 1st-stage SCI) to a second UE using the resource (S8010).

A first UE can transmit a PSSCH (e.g., 2nd-stage SCI, MAC PDU, data, etc.) related to the PSCCH to a second terminal (S8020).

A first UE can receive a PSFCH related to a PSCCH/PSSCH from a second UE (S8030).

Referring to FIG. 8(a) or FIG. 8(b), for example, a first UE may transmit SCI to a second UE on a PSCCH. Alternatively, for example, a first UE may transmit two consecutive SCIs (e.g., 2-stage SCIs) to a second UE on a PSCCH and/or a PSSCH. In this case, the second UE may decode the two consecutive SCIs (e.g., 2-stage SCIs) to receive the PSSCH from the first UE. In the present disclosure, the SCI transmitted on the PSCCH may be referred to as first (1st) SCI, a first SCI, first-stage SCI, or a 1st-stage SCI format, and the SCI transmitted on the PSSCH may be referred to as second (2nd) SCI, second SCI, second-stage SCI, or a 2nd-stage SCI format. For example, the 1st-stage SCI format may include SCI format 1-A, and the 2nd-stage SCI format may include SCI format 2-A and/or SCI format 2-B.

Referring to FIG. 8(a) or FIG. 8(b), in step S8030, a first UE may receive a PSFCH based on the description to be described below. For example, a first UE and a second UE can determine a PSFCH resource based on the description described below, and the second UE can transmit HARQ feedback to the first UE using the PSFCH resources.

Sidelink discontinuous reception (SL DRX)

SL supports SL DRX for unicast, groupcast, and broadcast. To determine an SL active time for SL DRX, similar parameters (on-duration, inactivity-timer, retransmission-timer, cycle) defined for Uu (i.e., link between base station and UE) are defined for SL. During the SL active time, a UE performs SCI monitoring for data reception (i.e., 2-step SCI of PSCCH, PSSCH). A UE can skip SCI monitoring for data reception during the SL DRX inactive time.

An SL active time of an RX UE includes a time during which applicable SL on-duration timer(s), SL inactivity-timer(s) or SL retransmission timer(s) (for unicast, groupcast or broadcast) are running. In addition, slots associated with periodic transmissions announced by a TX UE and a time during which a UE expects a CSI report following a CSI request (for unicast) are considered as the SL active time of the RX UE.

A TX UE maintains a set of timers corresponding to the SL DRX timers of the RX UE(s) for a pair of source/destination L2 (layer 2) IDs (identifiers) for unicast or destination L2 IDs for groupcast/broadcast. When data for transmission is available to one or more RX UE(s) configured with SL DRX, the TX UE selects a resource considering the active time of the RX UE(s) as determined by a timer maintained in the TX UE.

Alignment of Uu DRX and SL DRX in RRC_CONNECTED is supported for unicast, groupcast and broadcast. Alignment of Uu DRX and SL DRX in the same UE is supported. In addition, for mode 1 scheduling, alignment of Uu DRX of a TX UE and SL DRX of an RX UE is supported.

Alignment may include full or partial overlap in time between Uu DRX and SL DRX. For SL RX UE in RRC_CONNECTED, alignment is performed by a gNB.

The MAC entity can be configured by RRC with the SL DRX feature to control the SCI of the UE (i.e., first-stage SCI and second-stage SCI) for monitoring activities for unicast, groupcast and broadcast. When using SL DRX operation, the MAC entity shall also monitor the SCI (i.e., first-stage SCI and second-stage SCI) as required.

The RRC controls a sidelink DRX operation by setting the following parameters:

- sl-drx-onDurationTimer: Defines a duration at a start of an SL DRX cycle.
- sl-drx-SlotOffset: Defines the delay before starting sl-drx-onDurationTimer.
- sl-drx-SlotOffset: Defines a delay before starting sl-drx-onDurationTimer.
- sl-drx-InactivityTimer (excluding broadcast transmissions): Defines a duration after receiving the first slot of SCI indicating a new SL transmission to the MAC entity (i.e., first-stage SCI and second-stage SCI).
- sl-drx-RetransmissionTimer (per sidelink process excluding broadcast transmissions): Defines a maximum duration until an SL retransmission is received.
- sl-drx-StartOffset: Defines a slot where an SL DRX cycle starts.
- sl-drx-Cycle: Defines a sidelink DRX cycle.
- sl-drx-HARQ-RTT-Timer (per sidelink process excluding broadcast transmissions): Defines a minimum duration before an SL HARQ retransmission expected by the MAC entity.

When SL DRX is configured, an active timer includes the time for:

- a duration during which sl-drx-onDuration Timer or sl-drx-InactivityTimer is running; or
- a duration during which sl-drx-RetransmissionTimer is running; or
- a duration of sl-LatencyBoundCSI-Report configured by RRC, if an SL-CSI Report MAC CE is not received; or
- a duration between SL-CSI Report Request transmission and SL-SCI Report MAC CE reception, if an SL-CSI Report MAC CE is received; or
- a slot associated with a periodic transmission announced by a UE transmitting SL-SCH data.

A UE transmitting sidelink shared channel (SL-SCH) data must be aligned with a UE receiving SL-SCH data with respect to the SL DRX active time described above.

In addition, a UE transmitting SL-SCH data determines am SL DRX active time based on SL DRX timers (e.g., sl-drx-onDurationTimer, sl-drx-InactivityTimer, sl-drx-RetransmissionTimer) that are running or will be running in the future in the UE(s) receiving SL-SCH data. A UE can select a resource for the initial transmission of groupcast within the time during which the sl-drx-onDurationTimer or sl-drx-InactivityTimer of the destination is running.

Method for configuring SL discontinuous reception (DRX) in sidelink (SL) communication

Hereinafter, in the description of the present disclosure, for the convenience of explanation, a specific UE performing sidelink communication is assumed to be a relay UE and/or a remote UE, but the present disclosure is not limited thereto. That is, in the description of the present disclosure below, the relay UE and the remote UE may be replaced with the first UE and the second UE, respectively, or vice versa.

Here, a relay UE may mean a UE that is connected to a base station via a Uu interface (i.e., an interface/link between a UE and a base station) and to a remote UE via a PC5 interface (i.e., an interface/link between a UE and a UE). In addition, in the description of the present disclosure, a relay UE may also be referred to as a U2N relay UE in a UE-to-Network Relay (U2N Relay) architecture, but this is for convenience of description and the present disclosure is not limited thereto.

In addition, a remote UE may mean, but is not limited to, a UE that has a connection with a base station indirectly via a relay UE, and furthermore, may have a direct connection with a base station without going through a relay UE. For example, in the description of the present disclosure, a remote UE may be referred to as a U2N remote UE in a U2N Relay architecture, but this is for convenience of description and the present disclosure is not limited thereto.

In addition, in the description of the present disclosure, a PC5 or PC5-RRC connection means an interface/link/connection for communication between a UE and a UE, and can be interpreted as having the same meaning as a sidelink (connection) between a UE and a UE. In addition, a Uu or Uu RRC connection means an interface/link/connection for communication between a UE and a base station, and can be interpreted as having the same meaning as an uplink/downlink (connection) between a base station and a UE.

According to the prior art, when a relay UE and a remote UE are configured with a UE-to-Network Relay (U2N Relay) function, the relay UE provides connectivity to the U2N remote UE(s) to the network. If the U2N relay function is based on the L3 (layer 3) U2N Relay architecture, a base station cannot accurately know an SL active time used by the relay UE and the remote UE. Therefore, the SL active time may not be well coordinated with the UL transmission(s) and DL reception(s) of the relay UE, which may lead to non-optimal UE power consumption.

To solve these problems, the present disclosure proposes a method for configuring/constructing SL DRX configuration by a relay UE and/or a remote UE. In addition, a method for performing data transmission and reception by a relay UE and/or a remote UE for this purpose is proposed.

The proposed method of the present disclosure includes the following steps:

- A remote UE can establish a PC5-RRC connection with a relay UE. That is, a remote UE and a relay UE can establish an SL connection.

- A relay UE and a remote UE can each construct and configure a first SL DRX configuration for a PC5-RRC connection (i.e., the SL connection). A remote UE can transmit a first SL DRX configuration to a relay UE, or vice versa, a relay UE can transmit a first SL DRX configuration to a remote UE.

Here, a relay UE and a remote UE can determine an SL active time based on a first SL DRX configuration, respectively.

- If a remote UE is not in RRC_CONNECTED state, the remote UE establishes a Uu RRC connection through a relay UE for an indirect Uu RRC connection (i.e., uplink/downlink connection).

Here, if a remote UE has a direct Uu RRC connection (i.e., not via a relay UE) with a base station in addition to an indirect Uu RRC connection, the base station may configure SL mode 1 (or NR resource allocation mode 1, see FIG. 8) for SL transmission from the remote UE.

In addition, regardless of whether a remote UE has a direct Uu RRC connection (i.e., not via a relay UE) with a base station, the base station may configure SL mode 2 (or NR resource allocation mode 2, see FIG. 8) for SL transmission of the remote UE.

- A remote UE may report a preferred DRX configuration to a base station via the relay UE. Alternatively, a remote UE may report a first SL DRX configuration to a gNB via a relay UE.

Here, a preferred DRX configuration can be constructed based on a first SL DRX configuration.

- A base station can configure a first SL DRX configuration based on a PC5-RRC connection or a preferred DRX for a remote UE.
- A relay UE can receive a second SL DRX configuration from a base station and transmit all or part of the second SL DRX configuration to a remote UE.

For example, a relay UE can transmit all or part of a second SL DRX configuration to a remote UE via a PC5-RRC message (or a Uu RRC message).

Alternatively, a relay UE can configure a third SL DRX configuration based on a second SL DRX configuration and transmit the third SL DRX configuration to a remote UE via a sidelink RRC message.

- A remote UE can configure SL DRX with a second or third SL DRX configuration received from a relay UE for a PC5-RRC connection.

- According to the proposed method of the present disclosure, when a second or third SL DRX configuration is applied, a remote UE and/or a relay UE can determine an SL active time as follows:

For example, a UE can remove a first SL DRX configuration and apply a second or third SL DRX configuration to determine an SL active time for a PC5-RRC connection. In addition, the UE can determine the SL active time for the PC5-RRC connection based only on the second or third SL DRX configuration.

Alternatively, a UE may determine an SL active time for a PC5-RRC connection based on i) both a first SL DRX configuration and a second SL DRX configuration, or ii) both a first SL DRX configuration and a third SL DRX configuration. For example, a UE may determine a first SL active time based on a first SL DRX configuration and a second SL active time based on a second or third SL DRX configuration. In addition, the UE may determine a final SL active time based on a sum of the first SL active time and the second SL active time for a PC5-RRC connection. As another example, the UE may determine a final SL active time as a larger value between the first SL active time and the second SL active time.

Additionally, a UE may be configured with one or more other SL DRX configurations for one or more other PC5-RRC connections or for one or more other destinations (e.g., for one or more of unicast, groupcast and broadcast).

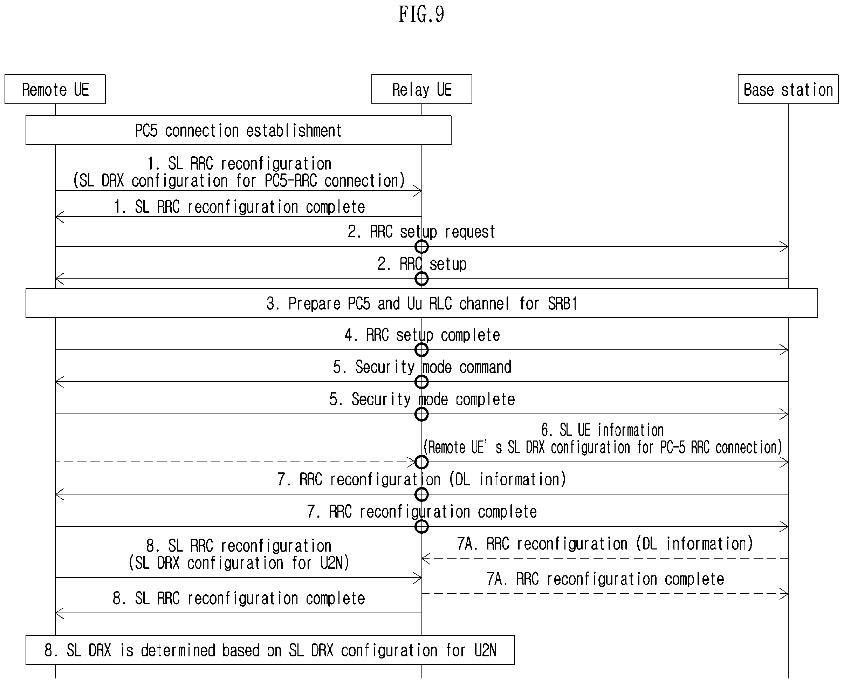

FIG. 9 illustrates an SL DRX configuration method according to an embodiment of the present disclosure.

Referring to FIG. 9, a method for performing data reception by a receiving UE may include the following steps.

1. A U2N Remote and a U2N Relay UE perform discovery procedure, and establish a PC5-RRC connection using a predefined procedure (e.g., NR V2X procedure). Then, the U2N remote UE constructs and sends a first SL DRX configuration to the U2N relay UE via an SL RRC reconfiguration message (e.g., RRCReconfigurationSidelink) for the PC5-RRC connection (i.e., SL connection), and the U2N relay UE may transmit the first SL DRX configuration to the U2N remote via an SL RRC reconfiguration complete message (e.g., RRCReconfigurationSidelinkComplete). Alternatively, conversely, the U2N relay UE may configure/establish a first SL DRX configuration and transmit the first SL DRX configuration to the U2N remote UE via an SL RRC reconfiguration message (e.g., RRCReconfigurationSidelink) for the PC5-RRC connection (i.e., SL connection), and the U2N remote UE may send an SL RRC reconfiguration complete message (e.g., RRCReconfigurationSidelinkComplete) to the U2N relay.

(If the U2N relay UE receives the first SL DRX configuration) the U2N relay UE may apply the first SL DRX configuration to determine an SL active time for monitoring SCI from the U2N remote UE for the PC5-RRC connection (i.e., SL connection). Alternatively, (If the U2N remote UE receives the first SL DRX configuration) the U2N remote UE may apply the first SL DRX configuration to determine an SL active time for monitoring SCI from the U2N relay UE for the PC5-RRC connection (i.e., SL connection).

2. If the U2N remote UE does not have direct Uu RRC connection (i.e., uplink/downlink connection with a base station), the U2N remote UE may transmit a first RRC message (i.e., an RRC Setup Request (RRCSetupRequest) message) to the U2N relay UE to establish connection with the base station by using a designated PC5 channel (e.g., a PC5 Relay RLC channel) configuration. If the U2N relay UE is not in RRC_CONNECTED state, it may need to establish its own connection when receiving the message on the designated PC5 channel (e.g., a PC5 Relay RLC channel). During the RRC connection establishment procedure of the U2N relay UE, the base station may configure SRB0 (signaling radio bearer 0) for relaying (e.g., relaying the U2N relay RLC channel) to the U2N Relay UE. The base station may respond with an RRC Setup (RRCSetup) message to the U2N Remote UE. The RRCSetup message can be transmitted to the U2N remote UE using the SRB0 relay channel over Uu (i.e., the channel between the base station and the relay UE) and the designated PC5 relay channel over PC5 (i.e., the channel between the relay UE and the remote UE).

3. The base station and the U2N relay UE perform a relaying channel setup procedure via Uu (i.e., uplink/downlink connection with a base station). Depending on a configuration of the base station, the U2N relay/remote UE can establish a PC5 channel (e.g., PC5 Relay RLC channel) to relay SRB1 toward the U2N Remote/Relay UE via PC5 (i.e., SL connection between the relay UE and the remote UE).

4. Using an SRB1 relay channel configured to the U2N Relay UE via Uu and the SRB1 relay channel via PC5, a RRC Setup Complete (RRCSetupComplete) message can be transmitted by the U2N Remote UE to the base station via the U2N Relay UE. In this case, the U2N Remote UE transitions to RRC Connected state via Uu.

5. The U2N Remote UE and the base station can set up security according to a Uu procedure, and security messages (i.e., the SecurityModeCommand message and the SecurityModeComplete message) can be transmitted through the U2N Relay UE.

6. The U2N Remote UE may inform the base station about the SL DRX configuration through the U2N Relay UE by transmitting an SL UE Information (SidelinkUEInformationNR) message. Here, the SL UE Information (SidelinkUEInformationNR) message may include a first SL DRX configuration using the SRB1 (or SRB2, if configured) relay channel over PC5 and the SRB1 (or SRB2, if configured) relay channel configured to the U2N Relay UE over Uu. Alternatively, the U2N Relay UE may inform the base station about the first SL DRX configuration received from the U2N Remote UE (i.e., without receiving the SL UE Information (SidelinkUEInformationNR) message from the remote UE).

7. The base station may indirectly transmit an RRC Reconfiguration message to the U2N Remote UE through the U2N Relay UE to set up signaling radio bearer 2 (SRB2)/data radio bearer (DRB) and/or set up SL DRX for relay. The U2N Remote UE may transmit an RRC Reconfiguration Complete message to the base station through the U2N Relay UE in response.

Alternatively, if the U2N Remote UE has a direct Uu RRC connection between the U2N remote UE and the base station in addition to an indirect Uu RRC connection with the base station via the U2N Relay UE, the U2N Remote UE may also send an RRCReconfigurationComplete message to the base station indirectly via the U2N Relay UE or directly in the uplink in response.

In addition, the base station may additionally set up a Uu channel (e.g., Uu Relay RLC channel) between the base station and the U2N Relay UE for relay traffic and a PC5 channel (e.g., PC5 Relay RLC channel) between the U2N Relay UE and the U2N Remote UE.

Here, the RRC Reconfiguration message may include information on a second SL DRX configuration.

Alternatively, if the U2N Remote UE has a direct Uu RRC connection between the U2N remote UE and the base station in addition to an indirect Uu RRC connection with the base station via the U2N Relay UE, the base station may directly transmit an RRC reconfiguration message to the U2N remote UE in the downlink via the direct Uu RRC connection. In this case, the U2N Remote UE may transmit an RRC reconfiguration complete message to the base station in response, either indirectly via the U2N Relay UE or directly in the uplink.

Alternatively, the base station may directly send an RRC reconfiguration (RRCReconfiguration) message including the second SL DRX configuration to the U2N Relay UE. In this case, the relay UE may configure a third SL DRX configuration based on the second SL DRX configuration and transmit the third SL DRX configuration to the remote UE via the SL RRC reconfiguration (RRCReconfigurationSidelink) message. Alternatively, the relay UE may transmit the second SL DRX configuration to the remote UE via the SL RRC reconfiguration (RRCReconfigurationSidelink) message. Then, the relay UE and/or the remote UE may skip step 8. The relay UE and/or the remote UE may determine the SL active time based on the second SL DRX configuration and/or the third SL DRX configuration.

In this case, the RRCReconfiguration message may include one or more second SL DRX configurations (e.g., as a list of second SL DRX configurations). When the relay UE receives the list, the relay UE may select one SL DRX configuration from the list. For example, the relay UE may select one SL DRX configuration based on the PC5-RRC connection and/or the U2N relay connection and/or the QoS characteristics for the DL DRX of the relay UE. Then, the relay UE may transmit the selected SL DRX configuration to the remote UE as the third SL DRX configuration. Thereafter, the relay UE may inform the base station about the selected SL DRX configuration via the RRCReconfigurationComplete message or another SL UE information (SidelinkUEInformationNR) message

8. If the RRCReconfiguration message includes the second SL DRX configuration, the U2N remote UE may transmit the second SL DRX configuration to the U2N relay UE via the SL RRCReconfigurationSidelink message for PC5-RRC connection. Alternatively, the U2N relay UE may transmit the second SL DRX configuration to the U2N remote UE via the SL RRCReconfigurationSidelink message for PC5-RRC connection. The U2N Relay UE may apply the second SL DRX configuration to determine the SL active time for monitoring SCI in the U2N Remote UE for PC5-RRC connection.

Here, the RRC Reconfiguration message may include one or more second SL DRX configurations (e.g., as a list of second SL DRX configurations). When the remote UE receives the list, the remote UE may select one SL DRX configuration from the list. For example, the remote UE may select one SL DRX configuration based on the QoS (quality of service) characteristics for the PC5-RRC connection and/or the U2N relay connection and/or the DL DRX of the remote UE. Then, the remote UE may transmit the selected SL DRX configuration to the relay UE as the second SL DRX configuration. After that, the remote UE may directly or indirectly inform the base station about the selected SL DRX configuration via the RRC reconfiguration complete message or another SL UE information (SidelinkUEInformationNR) message.

If the RRCReconfiguration message does not include the second SL DRX configuration or the remote UE does not select any of the second SL DRX configurations (e.g., because none of the second SL DRX configurations can satisfy the QoS requirements for the PC5-RRC connection), the U2N remote UE and the U2N relay UE may skip step 8. As a result, the U2N remote UE and the U2N relay UE may continue to use the first SL DRX configuration for the relay UE to determine the SL active time for monitoring SCI from the U2N remote UE for the PC5-RRC connection.

Alternatively, the base station may directly send an RRCReconfiguration message including the second SL DRX configuration to the U2N Relay UE. In this case, the U2N remote UE does not need to transmit the second SL DRX configuration to the U2N relay UE.

According to one embodiment of the present disclosure, when the second SL DRX configuration or the third SL DRX configuration is applied, the remote UE and/or the relay UE may determine the SL active time as follows.

For example, the UE may remove the first SL DRX configuration and apply the second SL DRX configuration or the third SL DRX configuration to determine the SL active time for the PC5-RRC connection. And the UE may determine the SL active time for the PC5-RRC connection only based on the second SL DRX configuration or the third SL DRX configuration.

Alternatively, for example, the UE may determine the SL active time for the PC5-RRC connection based on i) both the first SL DRX configuration and the second SL DRX configuration or ii) both the first SL DRX configuration and the third SL DRX configuration. For example, the UE may determine a first SL active time based on the first SL DRX configuration and a second SL active time based on the second or third SL DRX configuration. Then, the UE may determine a final SL active time based on a sum of the first SL active time and the second SL active time for the PC5-RRC connection. In addition, the UE may inform the base station about the final SL active time.

Here, the UE may be configured with one or more different SL DRX configurations for one or more different PC5-RRC connections or one or more different destinations (e.g., one or more unicast, groupcast, broadcast).

Meanwhile, the remote UE may directly or indirectly receive the second SL DRX configuration from the base station. In addition, the remote UE may receive the first and/or third SL DRX configuration from the relay UE. In this case, in order to receive SCI from the relay UE for the PC5-RRC connection and/or the U2N relay connection, the remote UE may determine the SL active time based on the second SL DRX configuration and the first and/or third SL DRX configuration from the relay UE. For example, the UE may determine the first SL active time based on the first and/or third SL DRX configuration and the second SL active time based on the second SL DRX configuration. Then, the UE may determine the final SL active time based on the sum of the first SL active time and the second SL active time for the PC5-RRC connection. In addition, the UE may inform the base station about the final SL active time.

By using the proposed method of the present disclosure described above, when the UE performs SL transmission and/or reception, especially when the UE is configured with SL DRX and U2N relay functions, the UE power can be saved.

While the conventional art does not define a method for providing a UE power saving mechanism for sidelink relay, the proposed method of the present disclosure is effective in that the system can appropriately provide power-efficient sidelink reception based on indirect Uu RRC connection through U2N relay and SL DRX configuration.

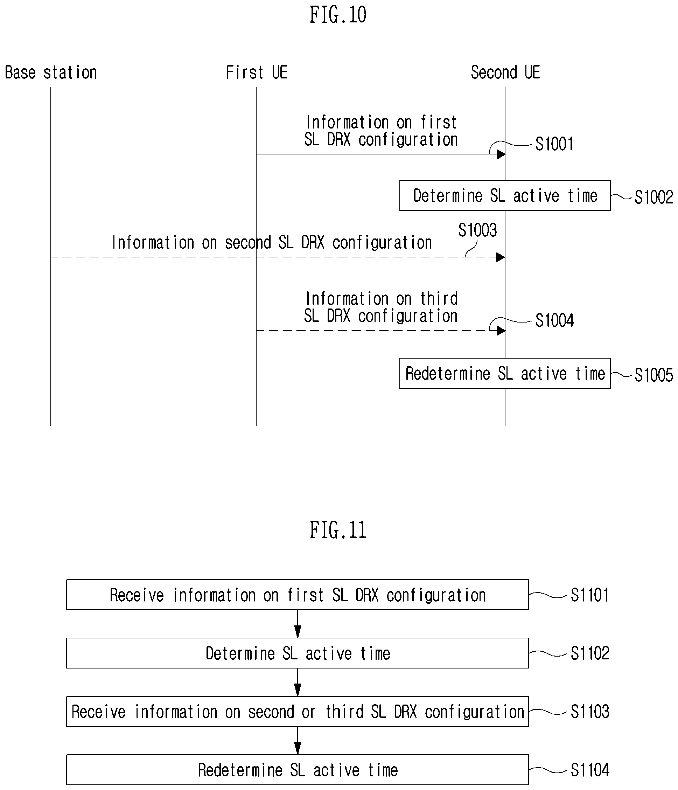

FIG. 10 illustrates a signaling procedure for an SL DRX configuration method according to an embodiment of the present disclosure.

In FIG. 10, a first UE may correspond to a relay UE, and a second UE may correspond to a remote UE.

Alternatively, conversely, a first UE may correspond to a remote UE, and a second UE may correspond to a relay UE. In this case, signaling between a first UE and a base station may be performed via a direct link (if a direct link is established) or may be performed indirectly via a second UE.

Referring to FIG. 10, a first UE transmits information on a first SL DRX configuration to a second UE (S1001).

For example, information on a first SL DRX configuration may include at least one of the following information:

- sl-drx-onDurationTimer: A duration at a start of a SL DRX cycle
- sl-drx-SlotOffset: A delay before starting sl-drx-onDurationTimer
- sl-drx-InactivityTimer (excluding broadcast transmission): A duration after reception of the first slot of SCI indicating a new SL transmission to the MAC entity (i.e., 1-stage SCI and 2-stage SCI)
- sl-drx-RetransmissionTimer (per sidelink process excluding broadcast transmission): A maximum duration until SL retransmission is received
- sl-drx-StartOffset: A slot where SL DRX cycle starts
- sl-drx-Cycle: A sidelink DRX cycle
- sl-drx-HARQ-RTT-Timer (per sidelink process excluding broadcast transmission): Minimum duration before SL HARQ retransmission expected by MAC entity

A second UE determines an SL active time based on the receive information on the first SL DRX configuration (S1002).

For example, an SL active time may be determined to include at least one of the following times:

- a time during which sl-drx-onDurationTimer or sl-drx-InactivityTimer is running; or
- a time during which sl-drx-RetransmissionTimer is running; or
- a duration of sl-LatencyBoundCSI-Report configured by RRC, if SL-CSI Report MAC CE is not received; or
- a time between transmission of SL-CSI Report Request and reception of SL-SCI Report MAC CE, if SL-CSI Report MAC CE is received; or
- a slot associated with a periodic transmission announced by the UE transmitting SL-SCH data.

A second UE may receive information on a second SL DRX configuration from a base station or receive information on a third SL DRX configuration from a first UE (S1003, S1004).

Here, for example, information on a second SL DRX configuration or information on a third SL DRX configuration may include at least one of the following information:

- sl-drx-onDurationTimer: A duration at a start of a SL DRX cycle
- sl-drx-SlotOffset: A delay before starting sl-drx-onDurationTimer
- sl-drx-InactivityTimer (excluding broadcast transmission): A duration after receiving the first slot of SCI indicating a new SL transmission to the MAC entity (i.e., Phase 1 SCI and Phase 2 SCI)
- sl-drx-RetransmissionTimer (per sidelink process excluding broadcast transmission): A maximum duration until an SL retransmission is received
- sl-drx-StartOffset: A slot at which an SL DRX cycle starts
- sl-drx-Cycle: A sidelink DRX cycle
- sl-drx-HARQ-RTT-Timer (per sidelink process, excluding broadcast transmissions): A minimum time-to-live before SL HARQ retransmission expected by the MAC entity.

Here, when a second UE receives a on a second SL DRX configuration from the base station, the information on the second SL DRX configuration may be received directly from the base station via an RRC (radio resource control) reconfiguration message or may be received indirectly via a first UE.

In addition, an RRC reconfiguration message includes a list of one or more SL DRX configurations, and the second SL DRX configuration can be selected and determined from the list. For example, the second SL DRX configuration can be selected from the list based on at least one of QoS characteristics for an SL connection between a first UE and a second UE, QoS characteristics for a connection with a base station, and DL DRX configuration of a second UE. In this case, when a second UE transmits an RRC reconfiguration complete message in response to an RRC reconfiguration message, information on the selected second SL DRX configuration can be directly transmitted to a base station through an RRC reconfiguration complete message or can be indirectly transmitted through a first UE.

Here, if a second UE receives information on a third SL DRX configuration from a first UE, the third SL DRX configuration may be determined based on an SL DRX configuration provided from a base station. For example, the third SL DRX configuration may be determined by selecting from a list of one or more SL DRX configurations provided from a base station via an RRC reconfiguration message. For example, the third SL DRX configuration may be selected from the list based on at least one of QoS characteristics for an SL connection between a first UE and a second UE, QoS characteristics for a connection with a base station, and DL DRX configuration of a first UE.

A second UE re-determines an SL active time based on a second SL DRX configuration or a third SL DRX configuration (S1005).

Here, an SL active time may be i) re-determined based on both a first SL DRX configuration and a second SL DRX configuration, or ii) re-determined based on both a first SL DRX configuration and a third SL DRX configuration.

For example, a second UE may determine a first SL active time from the previous first SL DRX configuration received from a first UE, and determine a second SL active time based on the second SL DRX configuration or the third SL DRX configuration received in step S1003 or S1004. Then, a final SL active time may be determined again as a sum of the first SL active time and the second SL active time.

FIG. 11 is a diagram illustrating an operation of a UE for an SL DRX configuration method according to an embodiment of the present disclosure.

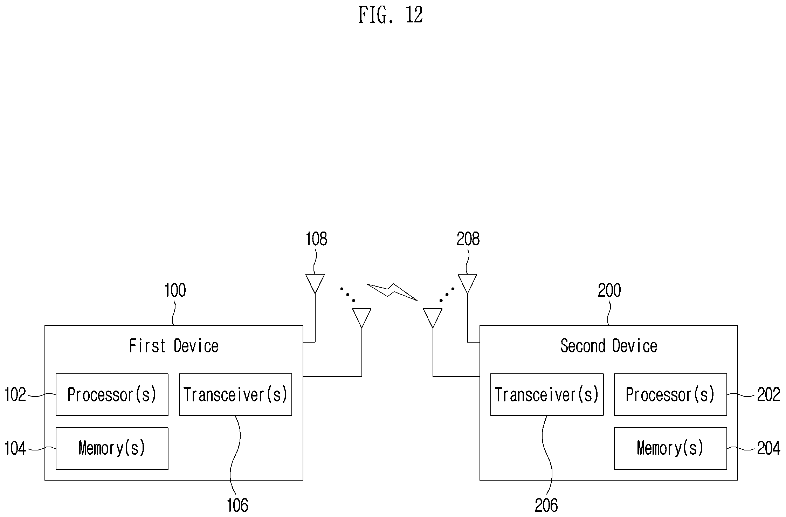

FIG. 11 illustrates an operation of a UE based on the previously proposed method. The example of FIG. 11 is for convenience of explanation and does not limit the scope of the present disclosure. Some step(s) illustrated in FIG. 11 may be omitted depending on the situation and/or setting. In addition, a UE in FIG. 11 is only an example and may be implemented as a device illustrated in FIG. 12 below. For example, the processor (102/202) of FIG. 12 may control to transmit and receive channels/signals/data/information, etc. using the transceiver (106/206). In addition, the processor (102/202) of FIG. 12 may control to store channels/signals/data/information, etc. to be transmitted in the memory (104/204), and may also control to store received channels/signals/data/information, etc. in the memory (104/204).

In FIG. 11, a first UE may correspond to a relay UE and a second UE may correspond to a remote UE. Alternatively, conversely, a first UE may correspond to a remote UE and a second UE may correspond to a relay UE.

Referring to FIG. 11, a first UE receives information on a first SL DRX setting from a second UE (S1101).

For example, information on a first SL DRX configuration may include at least one of the following information:

- sl-drx-onDurationTimer: A duration at a start of a SL DRX cycle
- sl-drx-SlotOffset: A delay before starting sl-drx-onDurationTimer
- sl-drx-InactivityTimer (excluding broadcast transmission): A duration after reception of the first slot of SCI indicating a new SL transmission to the MAC entity (i.e., first-stage SCI and second-stage SCI)
- sl-drx-RetransmissionTimer (per sidelink process excluding broadcast transmission): A maximum duration until SL retransmission is received
- sl-drx-StartOffset: A slot where SL DRX cycle starts
- sl-drx-Cycle: A sidelink DRX cycle
- sl-drx-HARQ-RTT-Timer (per sidelink process excluding broadcast transmission): Minimum duration before SL HARQ retransmission expected by MAC entity

A first UE determines an SL active time based on the receive information on the first SL DRX configuration (S1102).

For example, an SL active time may be determined to include at least one of the following times:

- a time during which sl-drx-onDurationTimer or sl-drx-InactivityTimer is running; or
- a time during which sl-drx-RetransmissionTimer is running; or
- a duration of sl-LatencyBoundCSI-Report configured by RRC, if SL-CSI Report MAC CE is not received; or
- a time between transmission of SL-CSI Report Request and reception of SL-SCI Report MAC CE, if SL-CSI Report MAC CE is received; or
- a slot associated with a periodic transmission announced by the UE transmitting SL-SCH data.

A first UE may receive information on a second SL DRX configuration from a base station or may receive information on a third SL DRX configuration from a second UE (S1103).

Here, for example, information on a second SL DRX configuration or information on a third SL DRX configuration may include at least one of the following information:

- sl-drx-onDurationTimer: A duration at a start of a SL DRX cycle
- sl-drx-SlotOffset: A delay before starting sl-drx-onDurationTimer
- sl-drx-InactivityTimer (excluding broadcast transmission): A duration after receiving the first slot of SCI indicating a new SL transmission to the MAC entity (i.e., Phase 1 SCI and Phase 2 SCI)
- sl-drx-RetransmissionTimer (per sidelink process excluding broadcast transmission): A maximum duration until an SL retransmission is received
- sl-drx-StartOffset: A slot at which an SL DRX cycle starts
- sl-drx-Cycle: A sidelink DRX cycle
- sl-drx-HARQ-RTT-Timer (per sidelink process, excluding broadcast transmissions): A minimum time-to-live before SL HARQ retransmission expected by the MAC entity.

Here, when a first UE receives a on a second SL DRX configuration from the base station, the information on the second SL DRX configuration may be received directly from the base station via an RRC (radio resource control) reconfiguration message or may be received indirectly via a second UE.

In addition, an RRC reconfiguration message includes a list of one or more SL DRX configurations, and the second SL DRX configuration can be selected and determined from the list. For example, the second SL DRX configuration can be selected from the list based on at least one of QoS characteristics for an SL connection between a first UE and a second UE, QoS characteristics for a connection with a base station, and DL DRX configuration of a first UE. In this case, when a first UE transmits an RRC reconfiguration complete message in response to an RRC reconfiguration message, information on the selected second SL DRX configuration can be directly transmitted to a base station through an RRC reconfiguration complete message or can be indirectly transmitted through a second UE.

Here, if a first UE receives information on a third SL DRX configuration from a second UE, the third SL DRX configuration may be determined based on an SL DRX configuration provided from a base station. For example, the third SL DRX configuration may be determined by selecting from a list of one or more SL DRX configurations provided from a base station via an RRC reconfiguration message. For example, the third SL DRX configuration may be selected from the list based on at least one of QoS characteristics for an SL connection between a first UE and a second UE, QoS characteristics for a connection with a base station, and DL DRX configuration of a second UE.

A first UE re-determines an SL active time based on a second SL DRX configuration or a third SL DRX configuration (S1104).

Here, an SL active time may be i) re-determined based on both a first SL DRX configuration and a second SL DRX configuration, or ii) re-determined based on both a first SL DRX configuration and a third SL DRX configuration.

For example, a first UE may determine a first SL active time from the previous first SL DRX configuration received from a second UE, and determine a second SL active time based on the second SL DRX configuration or the third SL DRX configuration received in step S1103. Then, a final SL active time may be determined again as a sum of the first SL active time and the second SL active time.

_General Device to which the Present Disclosure may be applied_

FIG. 12 is a diagram which illustrates a block diagram of a wireless communication device according to an embodiment of the present disclosure.

In reference to FIG. 12, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a first user equipment (UE) in a wireless communication system, the method comprising:

   receiving information for a first sidelink (SL) discontinuous reception (DRX) configuration from a second UE;
   determining an SL active time for monitoring sidelink control information (SCI) from the second UE based on the first SL DRX configuration; and
   redetermining the SL active time based on receiving information for a second SL DRX configuration from a base station or receiving information for a third SL DRX configuration from the second UE,
   wherein the SL active time is re-determined based on i) both the first SL DRX configuration and the second SL DRX configuration or ii) both the first SL DRX configuration and the third SL DRX configuration.

2. The method of claim 1, wherein the first SL active time is determined from the first SL DRX configuration, the second SL active time is determined based on the second SL DRX configuration or the third SL DRX configuration, and wherein the SL active time is re-determined as a sum of the first SL active time and the second SL active time.

3. The method of claim 1, wherein the information for the second SL DRX configuration is directly received from the base station through an RRC (radio resource control) reconfiguration message or indirectly received through the second UE.

4. The method of claim 3, wherein the RRC reconfiguration message includes a list of one or more SL DRX configurations, and the second SL DRX configuration is selected and determined from the list.

5. The method of claim 4, wherein the second SL DRX configuration is selected from the list based on at least one of a quality of service (QoS) characteristic for an SL connection between the first UE and the second UE, a QoS characteristic for a connection with the base station, and a downlink (DL) DRX configuration of the first UE.

6. The method of claim 4, further comprising:

transmitting an RRC (radio resource control) reconfiguration complete message to the base station directly or indirectly through the second UE in response to the RRC reconfiguration message,
wherein the RRC reconfiguration complete message includes information for the second SL DRX configuration.

7. The method of claim 1, wherein the third SL DRX configuration is determined based on an SL DRX configuration provided from the base station.

8. The method of claim 7, wherein the third SL DRX configuration is selected and determined from a list of one or more SL DRX configurations provided from the base station via an RRC (radio resource control) reconfiguration message.

9. The method of claim 8, wherein the third SL DRX configuration is selected from the list based on at least one of a quality of service (QoS) characteristic for an SL connection between the first UE and the second UE, a QoS characteristic for a connection with the base station, and a downlink (DL) DRX configuration of the first UE.

10. A first user equipment (UE) operating in a wireless communication system, the first UE comprising:

at least one transceiver for transmitting and receiving a wireless signal; and
at least one processor for controlling the at least one transceiver,
wherein the at least one processor configured to:
receive information for a first sidelink (SL) discontinuous reception (DRX) configuration from a second UE;
determine an SL active time for monitoring sidelink control information (SCI) from the second UE based on the first SL DRX configuration; and
redetermine the SL active time based on receiving information for a second SL DRX configuration from a base station or receiving information for a third SL DRX configuration from the second UE,
wherein the SL active time is re-determined based on i) both the first SL DRX configuration and the second SL DRX configuration or ii) both the first SL DRX configuration and the third SL DRX configuration.

11. At least one non-transitory computer-readable medium storing at least one instruction, wherein the at least one instruction executable by at least one processor controls a first user equipment (UE) to:

receive information for a first sidelink (SL) discontinuous reception (DRX) configuration from a second UE;
determine an SL active time for monitoring sidelink control information (SCI) from the second UE based on the first SL DRX configuration; and
redetermine the SL active time based on receiving information for a second SL DRX configuration from a base station or receiving information for a third SL DRX configuration from the second UE,
wherein the SL active time is re-determined based on i) both the first SL DRX configuration and the second SL DRX configuration or ii) both the first SL DRX configuration and the third SL DRX configuration.

12. A processing apparatus configured to control a first user equipment (UE) operating in a wireless communication system, the processing apparatus comprising:

at least one processor; and
at least one computer memory operably connected to the at least one processor and storing instructions that, based on being executed by the at least one processor, perform operations comprising:

receiving information for a first sidelink (SL) discontinuous reception (DRX) configuration from a second UE;
determining an SL active time for monitoring sidelink control information (SCI) from the second UE based on the first SL DRX configuration; and
redetermining the SL active time based on receiving information for a second SL DRX configuration from a base station or receiving information for a third SL DRX configuration from the second UE,
wherein the SL active time is re-determined based on i) both the first SL DRX configuration and the second SL DRX configuration or ii) both the first SL DRX configuration and the third SL DRX configuration.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

## FIG.5

Resource grid

A carrier
(up to 3300 subcarriers, i.e., 275 RBs)

A BWP

1 RB=12 subcarrier

1 RE

1 subcarrier

1 Symbol

l=0 ·····

k=0

# FIG.6

INITIAL CELL SEARCH — S601: PSS/SSS& [DLRS]& PBCH

SYSTEM INFORMATION RECEPTION — S602: PDCCH/PDSCH (BCCH)

RANDOM ACCESS PROCEDURE — S603: PRACH; S604: PDCCH/PDSCH; S605: PUSCH; S606: PDCCH/PDSCH

GENERAL DL/UL Tx/Rx — S607: PDCCH/PDSCH; S608: PUSCH/PUCCH

· DL/UL ACK/NACK
· UE CQI/PMI RI REPORT
  USING PUSCH AND PUCCH

# FIG.7

UE shall monitor PDCCH → | On Duration | Opportunity for DRX |

DRX Cycle

EP 4 535 880 A1

FIG.8

(a)                                   (b)

# FIG.9

**Remote UE**     **Relay UE**     **Base station**

PC5 connection establishment

1. SL RRC reconfiguration
(SL DRX configuration for PC5-RRC connection)

1. SL RRC reconfiguration complete

2. RRC setup request

2. RRC setup

3. Prepare PC5 and Uu RLC channel for SRB1

4. RRC setup complete

5. Security mode command

5. Security mode complete

6. SL UE information
(Remote UE's SL DRX configuration for PC-5 RRC connection)

7. RRC reconfiguration (DL information)

7. RRC reconfiguration complete

8. SL RRC reconfiguration
(SL DRX configuration for U2N)

7A. RRC reconfiguration (DL information)

8. SL RRC reconfiguration complete

7A. RRC reconfiguration complete

8. SL DRX is determined based on SL DRX configuration for U2N

## FIG.10

Base station               First UE               Second UE

Information on first
SL DRX configuration   —S1001

| Determine SL active time | ~S1002

Information on second SL DRX configuration   S1003

Information on third
SL DRX configuration   —S1004

| Redetermine SL active time | ~S1005

## FIG.11

| Receive information on first SL DRX configuration | —S1101

| Determine SL active time | —S1102

| Receive information on second or third SL DRX configuration | —S1103

| Redetermine SL active time | —S1104

EP 4 535 880 A1

# FIG. 12

**EP 4 535 880 A1**

## INTERNATIONAL SEARCH REPORT

International application No.

**PCT/KR2023/007515**

### A. CLASSIFICATION OF SUBJECT MATTER

**H04W 52/02**(2009.01)i; **H04W 76/28**(2018.01)i; **H04W 76/14**(2018.01)i; **H04W 72/25**(2023.01)i; **H04W 92/18**(2009.01)i

According to International Patent Classification (IPC) or to both national classification and IPC

### B. FIELDS SEARCHED

Minimum documentation searched (classification system followed by classification symbols)

H04W 52/02(2009.01); H04W 4/70(2018.01); H04W 72/12(2009.01); H04W 76/23(2018.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(SL: sidelink) 불연속 수신(DRX: discontinuous reception) 설정들 (configurations), SL 활동 시간(active time), 사이드 링크 제어 정보(SCI: sidelink control information), RRC(radio resource control) 재설정 메시지(reconfiguration message), 서비스 품질(QoS: quality of service)

### C. DOCUMENTS CONSIDERED TO BE RELEVANT

| Category* | Citation of document, with indication, where appropriate, of the relevant passages | Relevant to claim No. |
|---|---|---|
| Y | WO 2022-023471 A1 (TELEFONAKTIEBOLAGET LM ERICSSON (PUBL)) 03 February 2022 (2022-02-03)<br>See page 3, line 2 - page 33, line 35; claims 1, 11 and 20-21; and figures 7-12. | 1-12 |
| Y | US 2022-0046745 A1 (QUALCOMM INC.) 10 February 2022 (2022-02-10)<br>See paragraphs [0114]-[0122]. | 1-12 |
| Y | WO 2022-083440 A1 (QUALCOMM INC.) 28 April 2022 (2022-04-28)<br>See paragraphs [0068]-[0102]. | 3-9 |
| A | WO 2022-086115 A1 (LG ELECTRONICS INC.) 28 April 2022 (2022-04-28)<br>See paragraphs [0113]-[0134]; and claim 6. | 1-12 |
| A | APPLE. Discussion on Remaining issues of SL DRX. R2-2110062, 3GPP TSG-RAN WG2 Meeting #116-e. 22 October 2021.<br>See pages 1-11. | 1-12 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 September 2023** | **14 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT Information on patent family members | | International application No. PCT/KR2023/007515 |
|---|---|---|

| Patent document cited in search report | | | Publication date (day/month/year) | Patent family member(s) | | | Publication date (day/month/year) |
|---|---|---|---|---|---|---|---|
| WO | 2022-023471 | A1 | 03 February 2022 | CN | 116058069 | A | 02 May 2023 |
| | | | | CN | 116321535 | A | 23 June 2023 |
| | | | | EP | 4186328 | A1 | 31 May 2023 |
| US | 2022-0046745 | A1 | 10 February 2022 | None | | | |
| WO | 2022-083440 | A1 | 28 April 2022 | WO | 2022-082488 | A1 | 28 April 2022 |
| WO | 2022-086115 | A1 | 28 April 2022 | KR | 10-2023-0091098 | A | 22 June 2023 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- physical channels and modulation. *3GPP LTE, TS 36.211*
- multiplexing and channel coding. *TS 36.212*
- physical layer procedures. *TS 36.213*
- overall description. *TS 36.300*
- radio resource control. *TS 36.331*
- physical channels and modulation. *3GPP NR, TS 38.211*
- multiplexing and channel coding. *TS 38.212*
- physical layer procedures for control. *TS 38.213*
- physical layer procedures for data. *TS 38.214*
- NR and NG-RAN(New Generation-Radio Access Network. *TS 38.300*
- radio resource control protocol specification. *TS 38.331*